# EUROPEAN PATENT APPLICATION

(11) **EP 4 772 328 A1**
(43) Date of publication of application: **08.07.2026**
(21) Application number: 24859697.5
(22) Date of filing: 26.08.2024
(51) Int. Cl.: B29C 48/30

(54) **DIE FOR EXTRUSION MOLDING AND METHOD FOR PRODUCING SAME**

(30) Priority: 29.08.2023 JP 2023139010
(71) Applicant: Sumitomo Heavy Industries Modern, Ltd., Kanagawa 223-8511 (JP)
(72) Inventor: KASHIMA, Yusuke, Yokohama-shi Kanagawa 223-8511 (JP); TAKAUE, Jyuri, Yokohama-shi Kanagawa 223-8511 (JP)
(74) Representative: Louis Pöhlau Lohrentz
(86) International application number: PCT/JP2024/030235
(87) International publication number: WO 2025/047664

(57) **Abstract**

A method for producing a die for extrusion molding including a discharge port forming portion that forms a discharge port, the method includes a forming step S102 of forming a base material of the discharge port forming portion into a predetermined shape, and a build-up step S104 of forming, on a surface of the base material processed into the predetermined shape, a build-up layer constituting at least an end portion region of an inner wall surface of a flow path on a discharge port side, by laser cladding.

## Description

### Technical Field

The present disclosure relates to a die for extrusion molding and a method for producing the same.

### Background Art

PTL 1 discloses a die for extrusion molding used for an extrusion molding apparatus. PTL 1 generally discloses that, in the die for extrusion molding, at least a resin flow path is subjected to surface treatment by electroplating such as hard chromium plating in order to improve corrosion resistance, wear resistance, and releasability.

### Citation List

### Patent Literature

[PTL 1] Japanese Unexamined Patent Publication No. 2000-071311

### Summary of Invention

### Technical Problem

In the plating as described in PTL 1, holes such as pits and pinholes are likely to be generated. Holes that exist in at least an end portion region on a discharge port side of the flow path have to be repaired, but the repair requires labor and time, resulting in an increase in the producing cost of the die for extrusion molding.

The present disclosure has been made in such a situation, and one of the exemplary objects of an aspect thereof is to provide a technology capable of reducing the producing cost of the die for extrusion molding.

### Solution to Problem

In order to solve the above problem, a producing method according to an aspect of the present disclosure is a method for producing a die for extrusion molding including a discharge port forming portion that forms a discharge port, the method including forming a base material of the discharge port forming portion into a predetermined shape, and forming, on a surface of the base material processed into the predetermined shape, a build-up layer constituting at least an end portion region on a discharge port side of an inner wall surface of a flow path, by laser cladding.

Another aspect of the present disclosure is a die for extrusion molding. The die for extrusion molding includes a discharge port forming portion that forms a discharge port for a molten resin, in which the discharge port forming portion includes a base material, and a build-up layer of a cobalt-based alloy, the build-up layer being built up on a surface of the base material and constituting at least an end portion region on a discharge port side of a flow path surface.

Any combination of the above components and those in which the components and expressions of the present disclosure are interchanged among methods, apparatuses, systems, and the like are also effective as an aspect of the present disclosure.

### Advantageous Effects of Invention

According to the present disclosure, it is possible to provide a technology capable of reducing the producing cost of a die for extrusion molding.

### Brief Description of Drawings

FIG. 1 is a schematic diagram illustrating a schematic configuration of an inflation molding apparatus.
FIG. 2 is a sectional view of a die according to an embodiment.
FIG. 3 is an enlarged sectional view that enlarges and illustrates the periphery of a discharge port of the die.
FIG. 4 is a schematic producing process diagram illustrating a method for producing the die of FIG. 1.
FIG. 5 is a schematic diagram illustrating a state of a build-up step of FIG. 4.
FIG. 6 is a schematic producing process diagram illustrating a method for producing a die of a comparative example.

### Description of Embodiments

Hereinafter, the same reference numeral is assigned to the same or equivalent component, member, and step illustrated in each drawing, and duplicate description will be omitted as appropriate. In addition, a dimension of the member in each drawing is enlarged and reduced as appropriate for easy understanding. In addition, a part of the member that is not important for describing the embodiment is omitted and illustrated in each drawing.

In the embodiment, a case where a die for extrusion molding is a round die, that is, a die for an inflation molding apparatus will be described as an example. However, the technical idea of the embodiment can also be applied to a T die and other dies for extrusion molding as long as no contradiction arises.

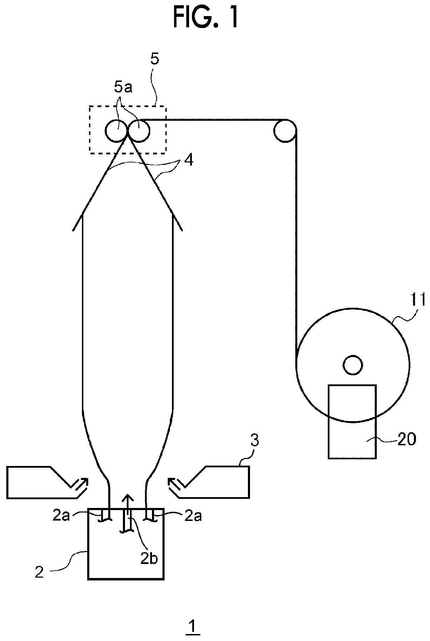

FIG. 1 is a schematic diagram illustrating a schematic configuration of an inflation molding apparatus 1 including a die for extrusion molding 2 (hereinafter, simply referred to as "die 2") according to an embodiment. The inflation molding apparatus 1 includes the die 2, a cooling device 3, a pair of stabilizing plates 4, and a haul-off machine 5.

Molten resin is supplied from an extruder (not illustrated) to the die 2. The resin is extruded from a ring-shaped discharge port 2a formed in the die 2. Air is discharged from an air outlet 2b formed in a center portion of the die 2 to the inside of the resin that is extruded. Accordingly, a thin resin film that is expanded into a tubular shape (hereinafter, also referred to as a "bubble") is formed. The cooling device 3 is disposed above the die 2 and blows cooling air to the bubble to cool the bubble.

The pair of stabilizing plates 4 are disposed above the cooling device 3 and guide the bubble to the haul-off machine 5. The haul-off machine 5 is disposed above the stabilizing plate 4. The haul-off machine 5 includes a pair of pinch rolls 5a. The pair of pinch rolls 5a is driven to rotate by a motor (not illustrated), and while pulling up the guided bubble, flattens the bubble. A winder 6 winds the folded resin film to form a film roll body 7.

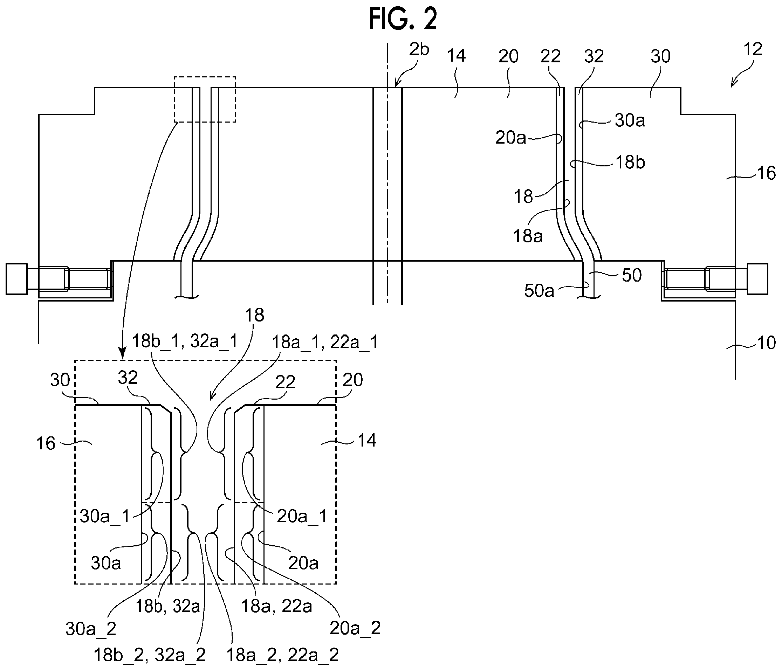

FIG. 2 is a vertical sectional view of the die 2. The die 2 includes a die body 10 and a discharge port forming portion 12 placed on an upper surface of the die body 10.

The configuration of the die body 10 is not particularly limited. The die body 10 has a resin flow path 50. The flow path 50 of the die body 10 is connected to a flow path 18 (to be described later) of the discharge port forming portion 12. An optional coating is applied to an inner wall surface 50a of the flow path 50 of the die body 10. The optional coating may be a hard chromium plating.

The discharge port forming portion 12 forms the discharge port 2a. The discharge port forming portion 12 includes an inner peripheral member 14 and an outer peripheral member 16. The inner peripheral member 14 is a cylindrical member. The outer peripheral member 16 is an annular member and surrounds the inner peripheral member 14. The flow path 18, which is a cylindrical gap, is formed between the inner peripheral member 14 and the outer peripheral member 16. The molten resin flows upward through the flow path 18, and the molten resin is extruded from the discharge port 2a which is an upper end opening of the flow path 18.

The inner peripheral member 14 includes a base material 20 and a build-up layer 22 as a coating layer formed on a surface of the base material 20. The base material 20 is formed of a metal such as S45C. In the present embodiment, the build-up layer 22 is formed on the entire outer peripheral surface 20a of the base material 20 and constitutes the inner wall surface 18a on the inner peripheral side of the flow path 18.

The outer peripheral member 16 includes a base material 30 and a build-up layer 32 formed on a surface of the base material 30 as a coating layer. The base material 30 is formed of a metal such as S45C, similar to the base material 20. In the present embodiment, the build-up layer 32 is formed on the entire inner peripheral surface 30a of the base material 30 and constitutes the inner wall surface 18b on the outer peripheral side of the flow path 18.

The build-up layers 22 and 32 are formed by laser cladding. Generally, the build-up layer 22 formed by laser cladding is relatively thick, and is, for example, thicker than hard chromium plating.

The build-up layers 22 and 32 are formed of materials different from the base materials 20 and 30, and are preferably formed of materials having relatively high toughness. The build-up layers 22 and 32 may be formed of a material having higher toughness than that of the hard chromium plating. The build-up layers 22 and 32 may be formed of a cobalt-based alloy, for example, Stellite 6 (registered trademark), which has relatively high toughness.

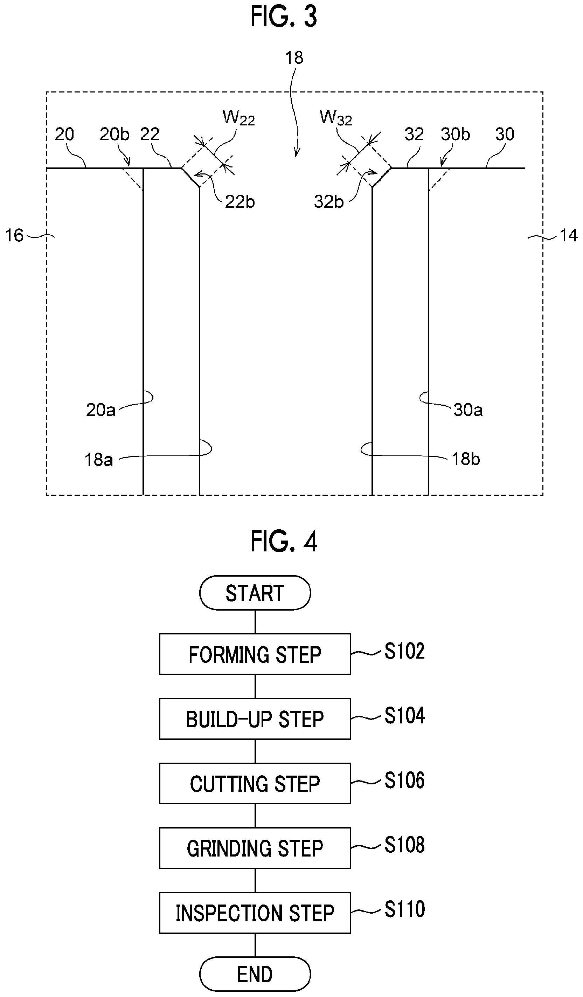

FIG. 3 is an enlarged sectional view that enlarges and illustrates the vicinity of the discharge port 2a of FIG. 2. Edge portions 22b and 32b of the discharge port 2a side of the build-up layers 22 and 32 are chamfered. In other words, the build-up layers 22 and 32 have a chamfered portion at an end edge on the discharge port 2a side. The chamfering may be C-chamfering as illustrated, R-chamfering, or any other type of chamfering.

From the viewpoint of suppressing the occurrence of so-called "resin buildup", it is preferable that the edge portions 22b and 32b are sharp, in other words, the chamfering of the edge portions 22b and 32b is small, and further, in other words, luminous-line widths W₂₂ and W₃₂ of the edge portions 22b and 32b are small. However, when the edge portions 22b and 32b are too sharp, the frequency of chipping at the edge portions 22b and 32b increases during cleaning of the die 2, which is uneconomical. In chamfering of the edge portions 22b and 32b, this needs to be taken into consideration.

In a case where the build-up layer 22 is formed of a cobalt-based alloy having relatively high toughness, for example, Stellite 6 (registered trademark), the luminous-line widths W₂₂ and W₃₂ of the edge portions 22b and 32b may be 50 µm or more and 100 µm or less. In this case, chipping at the edge portions 22b and 32b can be suppressed, and the occurrence of the resin buildup can be suppressed.

The edge portions 20b and 30b of the base materials 20 and 30 on the discharge port 2a side may be chamfered as indicated by broken lines. In this case, build-up can be more easily performed around the edge portions 20b and 30b.

Subsequently, a method for producing the die 2 described above will be described.

The method for producing the die 2 includes a process of producing the components of the die 2 such as the die body 10 and the discharge port forming portion 12, a process of assembling the die 2 by combining the produced components, and a process of inspecting the appearance, functions, and the like of the assembled die 2. The assembling process can be configured by using a known assembling technology. The inspecting process can be configured by using a known inspection technology.

FIG. 4 is a schematic producing process diagram illustrating a process of producing the discharge port forming portion 12. The process of producing the discharge port forming portion 12 includes a forming step S102, a build-up step S104, a cutting step S106, a grinding step S108, and an inspection step S110.

Hereinafter, each step will be described with the inner peripheral member 14 as an example. The outer peripheral member 16 may be produced in the same manner as the inner peripheral member 14.

In the forming step S102, for example, the base material 20 is formed into a predetermined shape by lathe machining or the like. The base material 20 has an outer shape obtained by removing the thickness of the build-up layer 22 from the inner peripheral member 14 at the location where the build-up layer 22 is formed.

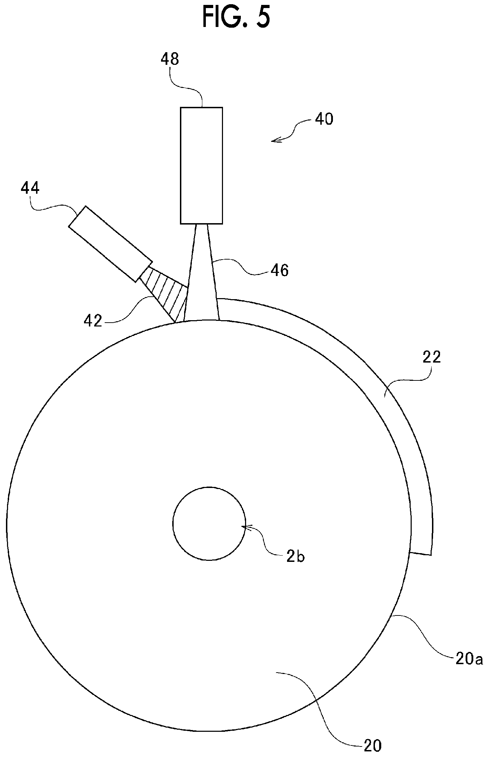

In the build-up step S104, the build-up layer 22 is formed on a surface of the base material 20 by the laser cladding. FIG. 5 is a schematic diagram illustrating a state of the build-up step S104. In this example, the build-up layer 22 is formed on the outer peripheral surface 20a of the base material 20 by using a build-up apparatus 40. The build-up apparatus 40 includes a nozzle 44 that supplies the build-up material 42 and a head 48 that irradiates the build-up material 42 with a laser beam 46 for inputting heat. The build-up material 42 may be a powder of the cobalt-based alloy such as Stellite 6 (registered trademark). The build-up layer 22 is formed by the build-up apparatus 40 by supplying the build-up material 42 from the nozzle 44 and melting the build-up material 42 with the laser beam 46 irradiated from the head 48. The formation of the build-up layer 22 is continuously performed over the entire region where the build-up layer 22 is to be formed by continuously changing the relative position of the supply position of the build-up material 42 and the irradiation position of the laser beam 46 with respect to the base material 20.

Returning to FIG. 4, in the cutting step S106, the surface of the build-up layer 22 formed in the build-up step S104 is cut such that the inner peripheral member 14 has a substantially desired shape. In the cutting step S106, the surface of the build-up layer 22 may be cut by the lathe machining.

In the grinding step S108, the surface of the build-up layer 22 cut in the cutting step S106 is mechanically ground so that the inner peripheral member 14 has a desired shape. In a case where a predetermined surface roughness is required for the inner wall surface 18a of the flow path 18, the surface of the build-up layer 22 is mechanically ground so that the inner wall surface 18a having the surface roughness is obtained.

In the grinding step S108, the edge portion 22b of the build-up layer 22 on the discharge port 2a side is chamfered. In other words, the chamfered portion is formed on the end edge of the build-up layer 22 on the discharge port 2a side. In a case where the build-up layer 22 is formed of a cobalt-based alloy such as Stellite 6 (registered trademark), the edge portion 22b may be processed to have a luminous-line width W₂₂ of 50 µm or more and 100 µm or less.

In the inspection step S110, the inner peripheral member 14 is inspected. For example, in the inspection step S110, it is inspected whether dimensions of respective portions of the inner peripheral member 14 are within the allowable range.

For example, in the inspection step S110, it is inspected that (i) there is no hole having a predetermined size (for example, a diameter of 0.2 mm) or more in the inner peripheral surface 22a of the build-up layer 22 constituting the inner wall surface 18a of the flow path 18, and (ii) there is no hole in an end portion region 22a_1 of the inner peripheral surface 22a of the build-up layer 22 that constitutes an end portion region 18a_1, on a discharge port 2a side, of the inner wall surface 18a of the flow path 18. When a hole is present in the end portion region 22a_1 of the build-up layer 22 constituting the end portion region 18a_1 of the inner wall surface 18a of the flow path 18, a die line may be generated in the molding product. In addition, when a hole having a predetermined size or more is present in an upstream side region 22a_2 of the build-up layer 22 constituting an upstream side region 18a_2 of the inner wall surface 18a of the flow path 18, a die line may be generated in the molding product. The end portion regions 18a_1 and 22a_1 may be, for example, a region of 10 mm from the discharge port 2a. The end portion regions 18a_1 and 22a_1 may be determined in advance through an experiment or the like.

In a case where the outer peripheral member 16 is produced, the terms "inner peripheral member 14", the "inner wall surface 18a", the "end portion region 18a_1", the "upstream side region 18a_2", the "base material 20", the "outer peripheral surface 20a", the "build-up layer 22", the "end portion region 22a_1", the "upstream side region 22a_2", the "edge portion 22b", and the "luminous-line width W₂₂" in the above descriptions of the respective steps may be read as the "outer peripheral member 16", the "inner wall surface 18b", the "end portion region 18b_1", the "upstream side region 18b_2", the "base material 30", the "inner peripheral surface 30a", the "build-up layer 32", the "end portion region 32a_1", the "upstream side region 32a_2", the "edge portion 32b", and the "luminous-line width W₃₂", respectively.

Subsequently, a producing method according to a comparative example to be compared with the embodiment will be described.

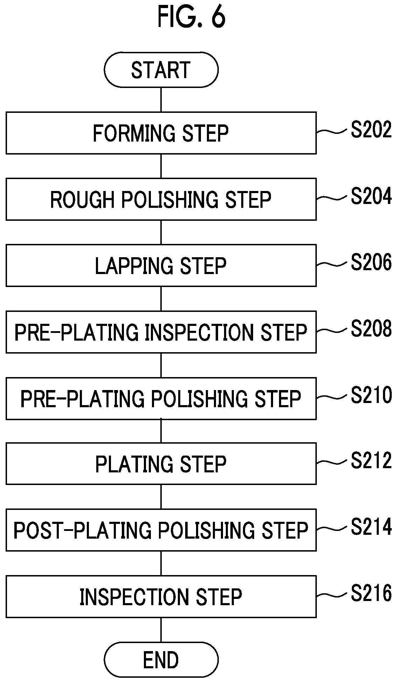

FIG. 6 is a schematic producing process diagram illustrating a process for producing a discharge port forming portion according to a comparative example. The process of producing the discharge port forming portion according to the comparative example includes a forming step S202, a rough polishing step S204, a lapping step S206, a pre-plating inspection step S208, a pre-plating polishing step S210, a plating step S212, a post-plating polishing step S214, and an inspection step S216.

The forming step S202 corresponds to the forming step 102.

In the rough polishing step S204, the outer peripheral surface of the base material of the inner peripheral member is buffed, that is, manually polished, to remove machining marks formed on the outer peripheral surface of the base material in the forming step S202. There is a possibility that the shape of the outer peripheral surface of the base material is distorted by manual polishing. The same applies to steps described later.

In the producing method of the present embodiment, the relatively thick build-up layer 22 is formed by the laser cladding. Therefore, the influence of the machining marks on the outer peripheral surface 20a of the base material 20 is absorbed by the build-up layer 22. Therefore, in the producing method of the present embodiment, the step corresponding to the rough polishing step S204 is not required.

In the lapping step S206, an upper surface of the die body 10 and a lower surface of the discharge port forming portion 12 are finished to be flat so that the resin does not leak from between the die body 10 and the discharge port forming portion 12. In the present embodiment, since the surfaces only need to be finished flat in the grinding step S108, a step corresponding to the lapping step S206 is not required.

In the pre-plating inspection step S208, it is inspected whether or not the dimension of the base material is within the allowable range.

In the pre-plating polishing step S210, the outer peripheral surface of the base material is buffed, that is, manually polished so as to satisfy the reference value of the surface roughness. This is because when the surface of the base material is rough, pits or pinholes are likely to be generated.

In the plating step S212, the base material is subjected to the hard chromium plating.

In the post-plating polishing step S214, the surface of the hard chromium plating is buffed, that is, manually polished.

The inspection step S216 corresponds to the inspection step S110.

Subsequently, effects of the embodiment will be described.

In the hard chromium plating as in the comparative example, pits or pinholes are often generated. In addition, even when certain pits are removed by scraping the surface of the hard chromium plating, as a result of scraping the surface evenly, other pits or pinholes are often exposed. In addition, in a process of scraping the hard chromium plating until the pits or the pinholes are not exposed, the thickness of the hard chromium plating may become thinner than an allowable thickness, and in this case, the plating needs to be redone. On the other hand, according to the present embodiment, the build-up layers 22 and 32 constituting the inner wall surfaces 18a and 18b of the flow path 18 are formed by the laser cladding. In the build-up layers 22 and 32 formed by the laser cladding, holes corresponding to pits or pinholes in the hard chromium plating are less likely to be generated. In addition, since the build-up layers 22 and 32 formed by laser cladding are relatively thick, a large repair allowance is provided. Therefore, even when holes exist on the surfaces of the build-up layers 22 and 32, the holes can be easily repaired within the repair allowance.

An outer peripheral surface of the inner peripheral member 14 and an inner peripheral surface of the outer peripheral member 16 are required to have a high shape accuracy in order to form the flow path 18. Here, in the producing method according to the comparative example, the hard chromium plating forms the outer peripheral surface of the inner peripheral member 14 and the inner peripheral surface of the outer peripheral member 16. Since the hard chromium plating is relatively brittle, when the hard chromium plating is mechanically ground, cracks or chips may occur in the edge portion or the like. Therefore, in the post-plating polishing step S214, the hard chromium plating is buffed, that is, manually polished. In addition, the base material on which the hard chromium plating is formed is also likely to generate pits or pinholes when the surface is rough, and thus, the surface is buffed, that is, manually polished in the pre-plating polishing step S210. Further, in the post-plating polishing step S214, the surface is also buffed, that is, manually polished. Therefore, in the producing method according to the comparative example, it is difficult even for a skilled person to produce the inner peripheral member 14 and the outer peripheral member 16 having a high shape accuracy. It is even more difficult for an unskilled person. In contrast, in the present embodiment, the surface of the build-up layer 22, which is the outer peripheral surface of the inner peripheral member 14, and the surface of the build-up layer 32, which is the inner peripheral surface of the outer peripheral member 16, are subjected to mechanical grinding. Accordingly, the inner peripheral member 14 and the outer peripheral member 16 having a high shape accuracy can be produced regardless of the skill level.

In the present embodiment, for example, the build-up layer 22 is formed of a cobalt-based alloy such as Stellite 6 (registered trademark), and the luminous-line widths W₂₂ and W₃₂ of the edge portions 22b and 32b are finished to be 50 µm or more and 100 µm or less.

In this case, chipping at the edge portions 22b and 32b can be suppressed, and the occurrence of the resin buildup can be suppressed. The luminous-line width can be made narrower, for example, 20 µm or less in order to prevent the generation of resin buildup, but as described above, there is a concern about edge chipping during cleaning, and the cost of maintaining accuracy also increases. Therefore, it is preferable to secure the luminous-line width of 20 µm or more. On the other hand, in the producing method according to the comparative example, since the edge portion is formed of chromium plating having relatively low toughness, in order to suppress the occurrence of chipping in the edge portion, it is necessary to finish the edge portion so that the luminous-line width is 150 µm or more. Accordingly, the resin buildup is likely to be generated as compared to the present embodiment.

The present disclosure has been described above based on the embodiments. It should be understood by those skilled in the art that the embodiments are mere examples, various modification examples can be made to the combinations of the respective components and respective processing processes, and such modification examples are also within the scope of the present disclosure.

### (Modification Example 1)

Although not particularly mentioned in the embodiments, the build-up layer 22 formed by the laser cladding may be formed in at least an end portion region 20a_1 on the discharge port 2a side of the outer peripheral surface 20a of the base material 20. That is, the build-up layer 22 formed by the laser cladding may be formed to constitute at least the end portion region 18a_1 on the discharge port 2a side of the inner wall surface 18a on the inner peripheral side of the flow path 18. Therefore, for example, the build-up layer 22 formed by the laser cladding may be formed only in the end portion region 20a_1 of the outer peripheral surface 20a of the base material 20. In this case, another coating, for example, hard chromium plating may be applied to an upstream side region 20a_2.

Similarly, the build-up layer 32 formed by the laser cladding may be formed in at least an end portion region 30a_1 on the discharge port 2a side of the inner peripheral surface 30a of the base material 30. That is, the build-up layer 32 formed by the laser cladding may be formed to constitute at least the end portion region 18b_1 on the discharge port 2a side of the inner wall surface 18b on the outer peripheral side of the flow path 18. Therefore, for example, the build-up layer 32 formed by the laser cladding may be formed only on the end portion region 30a_1 of the inner peripheral surface 30a of the base material 30. In this case, another coating, for example, hard chromium plating may be applied to an upstream side region 30a_2.

Any combination of the above-described embodiments and modification examples is also useful as an embodiment of the present disclosure. A new embodiment generated by the combination has the effects of each of the embodiments and the modification examples that are combined. In addition, it is also understood by those skilled in the art that the functions to be fulfilled by each of the configuration requirements described in the claims are realized by the respective components shown in the embodiments and modification examples, either individually or in cooperation.

### Industrial Applicability

The present disclosure relates to a die for extrusion molding and a method for producing the same.

### Reference Signs List

- 2: Die
- 2a: Discharge port
- 12: Discharge port forming portion
- 14: Inner peripheral member
- 16: Outer peripheral member
- 18: Flow path
- 18a and 18b: Inner wall surface
- 20: Base material
- 22: Build-up layer
- 30: Base material
- 32: Build-up layer

## Claims

1. A method for producing a die for extrusion molding including a discharge port forming portion that forms a discharge port, the method comprising:
forming a base material of the discharge port forming portion into a predetermined shape; and
forming, on a surface of the base material processed into the predetermined shape, a build-up layer constituting at least an end portion region on a discharge port side of an inner wall surface of a flow path, by laser cladding.

2. The method for producing a die for extrusion molding according to claim 1, further comprising:
mechanically grinding a surface of the build-up layer.

3. The method for producing a die for extrusion molding according to claim 2,
wherein the build-up layer is a layer of a cobalt-based alloy, and
mechanically grinding the surface of the build-up layer includes finishing an edge portion of the build-up layer on the discharge port side to have a luminous-line width of 20 µm or more and 100 µm or less.

4. A die for extrusion molding comprising:
a discharge port forming portion that forms a discharge port for a molten resin,
wherein the discharge port forming portion includes
a base material, and
a build-up layer of a cobalt-based alloy, the build-up layer being built up on a surface of the base material and constituting at least an end portion region on a discharge port side of a flow path surface.

5. The die for extrusion molding according to claim 4,
wherein a luminous-line width of an edge portion on the discharge port side of the build-up layer is 100 µm or less.
